# EUROPÄISCHE PATENTSCHRIFT

(11) **EP 4 413 429 B1**
(45) Veröffentlichungstag und Bekanntmachung des Hinweises auf die Patenterteilung: **27.08.2025**
(21) Anmeldenummer: 22814447.3
(22) Anmeldetag: 14.11.2022
(51) Int. Cl.: G05B 19/042

(54) **VERFAHREN UND SYSTEM ZUR BEREITSTELLUNG VON STEUERUNGSANWENDUNGEN FÜR EIN INDUSTRIELLES AUTOMATISIERUNGSSYSTEM**
METHOD AND SYSTEM FOR PROVISION OF CONTROL APPLICATIONS FOR AN INDUSTRIAL AUTOMATION SYSTEM
PROCÉDÉ ET SYSTÈME DE FOURNITURE DES APPLICATIONS DE COMMANDE POUR UN SYSTÈME D'AUTOMATISATION INDUSTRIAL

(30) Priorität: 07.12.2021 EP 21212849
(43) Veröffentlichungstag der Anmeldung: 14.08.2024
(73) Patentinhaber: Siemens Aktiengesellschaft, 80333 München (DE)
(72) Erfinder: ALBRECHT, Harald, 90475 Nürnberg (DE); FEIST, Christian Peter, 80689 München (DE)
(74) Vertreter: Siemens Patent Attorneys
(86) Internationale Anmeldenummer: PCT/EP2022/081754
(87) Internationale Veröffentlichungsnummer: WO 2023/104432

(56) Entgegenhaltungen:
- EP-A1- 3 557 463
- WO-A1-2020/249345

## Beschreibung

Die vorliegende Erfindung betrifft ein Verfahren zur Überwachung zur Bereitstellung von Steuerungsanwendungen für ein industrielles Automatisierungssystem und ein System zur Durchführung dieses Verfahrens.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

Aus EP 3 813 315 A1 ist ein Verfahren zur Diagnose des Datenverkehrs in einem Cluster mit mehreren Arbeitsknoten bekannt, bei dem durch die Arbeitsknoten Container bzw. Pods bereitgestellt werden. Mittels eines Cluster-Erfassungsmoduls werden Informationen erfasst, welchen Arbeitsknoten ein Knoten-Erfassungsmodul zugeordnet ist. Empfängt das Cluster-Erfassungsmodul eine Anfrage zum Erfassen von Datenpaketen, kontaktiert das Cluster-Erfassungsmodul die Knoten-Erfassungsmodule der betroffenen Knoten, und die Knoten-Erfassungsmodule erfassen Datenpakete. Außerdem leiten die Knoten-Erfassungsmodule die erfassten Datenpakete bzw. deren Duplikate an das Cluster-Erfassungsmodul weiter. Das Cluster-Erfassungsmodul leitet die erfassten Datenpakete bzw. Duplikate wiederum an eine jeweils anfragende Einheit weiter.

WO 2021/104632 A1 betrifft ein Verfahren zur Erfassung von Datenpakten, die von einem ersten Container innerhalb eines Clusters von Containern stammen. Dabei sind jedem Container mehrere Netzwerk-Schnittstellen zur Übermittlung von Datenpaketen zugeordnet. Sobald eine erste Verbindung zur Übermittlung von Datenpaketen über eine erste Netzwerk-Schnittstelle, die dem ersten Container zugeordnet ist, detektiert wird, wird eine dem ersten Container zugeordnete Kennung in einen der ersten Verbindung zugeordneten Datenstrom eingefügt. Anhand der eingefügten Kennung kann der erste Container zur Erfassung von Datenpakten, die von ihm stammen, identifiziert werden.

Die ältere internationale Patentanmeldung WO 2022/042905 A1 betrifft ein Verfahren zur Bereitstellung von zeitkritischen Diensten, denen jeweils zumindest eine Server-Komponente zugeordnet ist, die durch eine in eine Ablaufsteuerungsumgebung ladbare und dort ausführbare Ablaufsteuerungskomponente gebildet wird. Für die Server-Komponenten wird jeweils eine Funktionseinheit zur Verarbeitung eines Kommunikationsprotokollstapels verfügbar gemacht, die mit einer der Ablaufsteuerungsumgebung zugeordneten Funktionseinheit zur Verarbeitung eines Kommunikationsprotokollstapels verbunden ist. Die Dienste umfassen jeweils eine Verzeichnisdienst-Komponente zur Ermittlung mittels der Ablaufsteuerungsumgebung bereitgestellter Dienste. Die Verzeichnisdienst-Komponenten werden miteinander über eine separierte Kommunikationsschnittstelle verbunden. Mit der separierten Kommunikationsschnittstelle ist eine mittels einer weiteren Ablaufsteuerungskomponente gebildete Aggregator-Komponente verbunden, die Angaben über die mittels der Server-Komponenten bereitgestellten Dienste außerhalb der Ablaufsteuerungsumgebung verfügbar macht.

Aus WO 2020/249345 A1 ist ein Verfahren zur Bereitstellung von Steuerungsanwendungen bekannt, bei dem eine Konfigurationssteuerungseinrichtung von einer Überwachungseinrichtung Kommunikationsnetzadressen von Ablaufsteuerungskomponenten sowie Identifikatoren der Ablaufsteuerungskomponenten abfragt und diese Informationen den Steuerungsanwendungen zuordnet. Aus den abgefragten Kommunikationsnetzadressen und Identifikatoren sowie aus Bezeichnungen der Steuerungsanwendungen erzeugt die Konfigurationssteuerungseinrichtung Konfigurationsinformationen für eine Weiterleitungseinrichtung. Die Weiterleitungseinrichtung nimmt Anfragen von Endgeräten zur Nutzung der Steuerungsanwendungen entgegen und leitet diese entsprechend den Konfigurationsinformationen an eine jeweilige Ablaufsteuerungskomponente weiter.

EP 3 557 463 A1 betrifft ein Ausführungsumgebung, um auf Feldgeräten eine Ausführung von manipuliertem Programmcode zu unterbinden. Die Ausführungsumgebung umfasst einen Funktionsspeicher, der zum Speichern von Überprüfungsfunktionen eingerichtet ist, sowie einen Konfigurationsspeicher, der zum Speichern von Ausführungsanforderungen für Überprüfungsbereiche eingerichtet ist. Der Konfigurationsspeicher ist mittels eines Manipulationserkennungsmoduls geschützt. Die Ausführungsanforderungen können in einem Konfigurationsmodus der Ausführungsumgebung konfiguriert werden. Außerdem ist eine Ausführungseinheit vorgesehen, die dazu eingerichtet ist, mittels der Überprüfungsfunktionen ein Prüfergebnis zu ermitteln, das angibt, ob der jeweilige Überprüfungsbereich die Ausführungsanforderungen erfüllt. Darüber hinaus ist die Ausführungseinheit dazu eingerichtet, einen jeweiligen Programmbefehl bzw. Programmcode abhängig vom Prüfergebnis auszuführen.

Für eine flexible Bereitstellung von Automatisierungsfunktionen werden zunehmend in Automatisierungsgeräte nachladbare Steuerungsanwendungen genutzt, die beispielsweise mittels Container-Virtualisierung verfügbar gemacht werden. Insbesondere Steuerungsanwendungen zur Analyse von Datenverkehr innerhalb eines industriellen Automatisierungssystems oder zur Analyse von in Automatisierungsgeräten ablaufenden Steuerungsprozessen benötigen weitreichende Privilegien bzw. Sicherheitsberechtigungen. Sicherheitsschwachstellen derartiger Diagnoseanwendungen führen häufig zu erheblichen Sicherheitsrisiken für Automatisierungsgeräte oder -zellen in ihrer Gesamtheit. Je länger potentiell manipulierbare Steuerungswendungen auf Automatisierungsgeräten installiert verbleiben, desto höher sind die Sicherheitsrisiken innerhalb eines industriellen Automatisierungssystems.

Der vorliegenden Erfindung liegt daher die Aufgabe zugrunde, ein sicheres und mit geringem Aufwand implementierbares Verfahren zur Bereitstellung von umfangreichen Sicherheitsberechtigungen erfordernde Steuerungsanwendungen für ein industrielles Automatisierungssystem zu schaffen sowie eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein System mit den in Anspruch 13 angegebenen Merkmalen gelöst. Vorteilhafte Weiterbildungen sind in den abhängigen Ansprüchen angegeben.

Entsprechend dem erfindungsgemäßen Verfahren zur Bereitstellung von Steuerungsanwendungen für ein industrielles Automatisierungssystem werden die Steuerungsanwendungen jeweils mittels Ablaufsteuerungskomponenten bereitgestellt. Die Ablaufsteuerungskomponenten sind in eine mittels einer Server-Einrichtung gebildete Ablaufsteuerungsumgebung ladbar und dort ausführbar. Vorteilhafterweise kann für jede Anwendungsinstanz jeweils eine Ablaufsteuerungskomponente in die Ablaufsteuerungsumgebung geladen und dort ausgeführt werden. Darüber hinaus können die Ablaufsteuerungskomponenten auf jeweils andere Server-Einrichtungen zur dortigen Ausführung migriert bzw. auf jeweils anderen Server-Einrichtungen zeitgleich ausgeführt werden.

Insbesondere können die Ablaufsteuerungskomponenten Software-Container sein bzw. umfassen, die jeweils von anderen Software-Containern oder Container-Gruppen, z.B. Pods, isoliert innerhalb der Ablaufsteuerungsumgebung auf einem Host-Betriebssystem einer Server-Einrichtung ablaufen. Grundsätzlich können für die Ablaufsteuerungskomponenten auch alternative Micro-Virtualisierungskonzepte, wie Snaps, verwendet werden. Vorzugsweise nutzen die Software-Container jeweils gemeinsam mit anderen auf der jeweiligen Server-Einrichtung ablaufenden Software-Containern einen Kernel des Host-Betriebssystems der Server-Einrichtung. Speicherabbilder für die Software-Container können beispielsweise aus einem durch eine Vielzahl von Nutzern lesend bzw. schreibend zugreifbaren Speicher- und Bereitstellungssystem abgerufen werden.

Die Ablaufsteuerungsumgebung kann insbesondere eine Container-Laufzeitumgebung bzw. Container-Engine sein, durch die ein Anlegen, Löschen bzw. Verknüpfen von virtuellen Ressourcen erfolgt. Dabei umfassen die virtuellen Ressourcen Software-Container, virtuelle Kommunikationsnetze und diesen zugeordnete Verbindungen. Beispielsweise kann die Ablaufsteuerungsumgebung eine Docker Engine oder einen Snap Core umfassen, die bzw. der auf einer Server-Einrichtung abläuft.

Erfindungsgemäß wird Steuerungsanwendungen, die ausgewählte Sicherheitsberechtigungen erfordern, jeweils eine Kennzeichnung als sicherheitskritische Steuerungsanwendung zugeordnet. Für die Steuerungsanwendungen, denen eine Kennzeichnung als sicherheitskritische Steuerungsanwendung zugeordnet ist, wird jeweils zumindest eine Ablaufbedingung für die ausgewählten Sicherheitsberechtigungen festgelegt. Während einer Ausführung der Ablaufsteuerungskomponenten für die Steuerungsanwendungen überwacht die Ablaufsteuerungsumgebung jeweils ein Eintreten der jeweiligen Ablaufbedingung. Bei Eintreten der jeweiligen Ablaufbedingung wird die Ausführung der Ablaufsteuerungskomponenten jeweils beendet. Vorzugsweise wird die Ausführung der Ablaufsteuerungskomponenten jeweils nur bei noch nicht eingetretener Ablaufbedingung gestartet. Darüber hinaus können die Ablaufbedingungen insbesondere jeweils eine maximale Ausführungsdauer für die jeweilige Ablaufsteuerungskomponente umfassen. Somit sind die Ablaufbedingungen einfach und klar definierbar.

Mit der vorliegenden Erfindung kann beispielsweise sichergestellt werden, dass Diagnoseanwendungen mit weitreichenden Sicherheitsberechtigungen nur so lange auf einem Gerät aktiviert bzw. installiert verbleiben, wie es eine Nutzung dieser Anwendungen erfordert. Damit wird vermieden, dass sicherheitskritische, potentielle Angriffsziele darstellende Anwendungen aus Bequemlichkeitsgründen oder aus Unachtsamkeit nach ihrer Verwendung noch längere Zeit auf einem Gerät installiert bleiben oder gar noch weiterlaufen.

Entsprechend einer bevorzugten Ausgestaltung der vorliegenden Erfindung wird die Ausführung der Ablaufsteuerungskomponenten jeweils durch Ausführung einer in einer Sicherheitsrichtlinie definierten Aktion bei Eintreten der jeweiligen Ablaufbedingung beendet. Dabei kann die definierte Aktion insbesondere ein Stoppen bzw. Löschen der jeweiligen Ablaufsteuerungskomponente umfassen. Vorteilhafterweise wird durch die Sicherheitsrichtlinie jeweils die Ablaufbedingung in Abhängigkeit von der Kennzeichnung der jeweiligen Steuerungsanwendung festgelegt. Insgesamt ermöglicht dies eine flexible Anpassung der Ablaufbedingungen und definierten Aktionen an Anforderungen von Betreibern eines industriellen Automatisierungssystems.

Vorzugsweise wird durch die Kennzeichnungen der Steuerungsanwendungen eine jeweils anzuwendende Sicherheitsrichtlinie festgelegt. Darüber hinaus kann durch die Kennzeichnungen jeweils Funktionen der Steuerungsanwendungen bzw. zur Bereitstellung der Steuerungsanwendungen benötigte Sicherheitsberechtigungen bezeichnet oder vorgegeben werden. Dies ermöglicht eine einfach handhabbare Nutzung der Kennzeichnungen zur zuverlässigen Festlegung erforderlicher Sicherheitsberechtigungen bzw. Privilegien der Steuerungsanwendungen. Eine besonders einfache Handhabung ergibt sich, wenn die Kennzeichnungen entsprechend einer weiteren vorteilhaften Ausgestaltung der vorliegenden Erfindung jeweils als Zeichenkette zu Metadaten für die jeweilige Steuerungsanwendung hinzugefügt werden. Insbesondere können Kennzeichnungen auf diese Weise durch einen administrativen Eingriff, automatisch oder bei einer Veröffentlichung von Container-Images festgelegt werden.

Das erfindungsgemäße System zur Bereitstellung von Steuerungsanwendungen für ein industrielles Automatisierungssystem umfasst eine mittels einer Server-Einrichtung gebildete Ablaufsteuerungsumgebung sowie zumindest eine Ablaufsteuerungskomponente zur Bereitstellung einer Steuerungsanwendungen. Die Ablaufsteuerungskomponente ist in die Ablaufsteuerungsumgebung ladbar und dort ausführbar. Außerdem ist das System dafür eingerichtet, dass Steuerungsanwendungen, die ausgewählte Sicherheitsberechtigungen erfordern, jeweils eine Kennzeichnung als sicherheitskritische Steuerungsanwendung zugeordnet wird, und dass für die Steuerungsanwendungen, denen eine Kennzeichnung als sicherheitskritische Steuerungsanwendung zugeordnet ist, jeweils zumindest eine Ablaufbedingung für die ausgewählten Sicherheitsberechtigungen festgelegt wird. Darüber hinaus ist die Ablaufsteuerungsumgebung dafür eingerichtet, während einer Ausführung der Ablaufsteuerungskomponenten für die Steuerungsanwendungen jeweils ein Eintreten der jeweiligen Ablaufbedingung zu überwachen und dass die Ausführung der Ablaufsteuerungskomponenten jeweils bei Eintreten der jeweiligen Ablaufbedingung beendet wird.

Die vorliegende Erfindung wird nachfolgend an einem Ausführungsbeispiel anhand der Zeichnung näher erläutert. Es zeigt
- Figur 1: ein System zur Bereitstellung von Steuerungsanwendungen, die ausgewählte Sicherheitsberechtigungen erfordern,
- Figur 2: eine Darstellung eines Verfahrensablaufs zur Bereitstellung von Steuerungsanwendungen mittels des in Figur 1 dargestellten Systems.

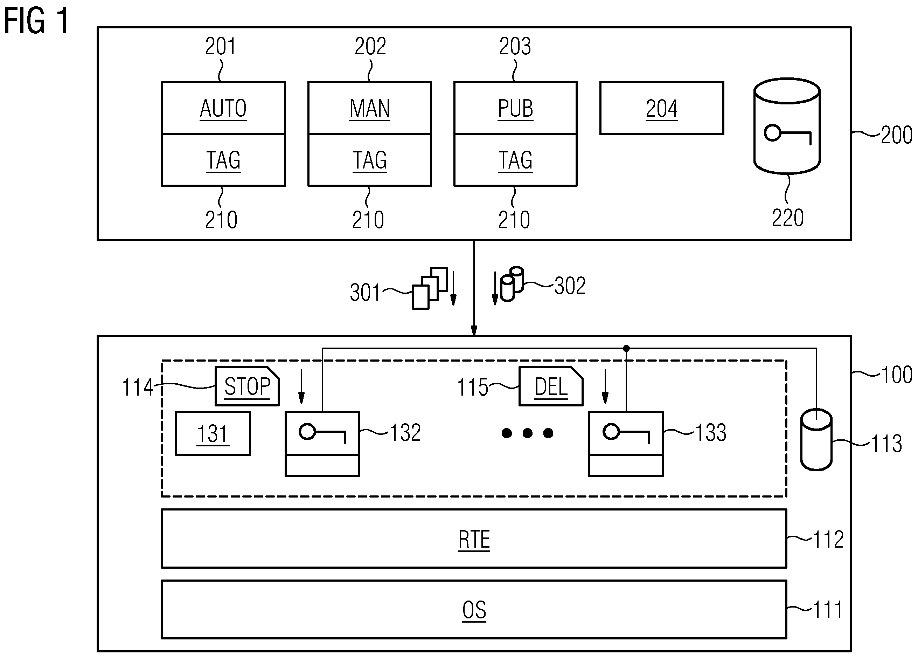

Das in Figur 1 dargestellte System umfasst eine Server-Einrichtung 100 zur Bereitstellung von Steuerungsanwendungen 201-204 eines industriellen Automatisierungssystems. Die Steuerungsanwendungen 201-204 des industriellen Automatisierungssystems sind exemplarisch für zeitkritische Dienste und können auch Überwachungsfunktionen umfassen. Die Steuerungsanwendungen können beispielsweise auf Grundlage von OPC UA bereitgestellt werden.

Die Server-Einrichtung 100 kann mittels der Steuerungsanwendungen 201-204 beispielsweise Funktionen von Steuerungsgeräten eines industriellen Automatisierungssystems, wie speicherprogrammierbaren Steuerungen, oder von Feldgeräten, wie Sensoren oder Aktoren, implementieren. Auf diese Weise kann die Server-Einrichtung 100 insbesondere für einen Austausch von Steuerungs- und Messgrößen mit durch die Server-Einrichtung 100 gesteuerten Maschinen oder Vorrichtungen genutzt werden. Dabei kann die Server-Einrichtung 100 aus erfassten Messgrößen geeignete Steuerungsgrößen für die Maschinen oder Vorrichtungen ermitteln.

Alternativ oder zusätzlich kann die Server-Einrichtung 100 mittels der Steuerungsanwendungen 201-204 Funktionen einer Bedien- und Beobachtungsstation implementieren und somit zur Visualisierung von Prozessdaten bzw. Mess- und Steuerungsgrößen genutzt werden, die durch Automatisierungsgeräte verarbeitet bzw. erfasst werden. Insbesondere kann die Server-Einrichtung 100 zur Anzeige von Werten eines Regelungskreises und zur Veränderung von Regelungsparametern oder -programmen verwendet werden.

Außerdem umfasst das in Figur 1 dargestellte System ein Management-System 200, mittels dessen für Steuerungsanwendungen 201-203, die ausgewählte Sicherheitsberechtigungen erfordern, jeweils eine Kennzeichnung 210 als sicherheitskritische Steuerungsanwendung zugeordnet wird. Die Kennzeichnungen 210 werden im vorliegenden Ausführungsbeispiel durch Tags gebildet, die jeweils als Zeichenkette zu Metadaten für die jeweilige Steuerungsanwendung 201-203 hinzugefügt werden können. Außerdem können die Tags beispielsweise für erste Steuerungsanwendungen 201 automatisch, für zweite Steuerungsanwendungen 202 manuell oder für dritte Steuerungsanwendungen 203 bei einer Veröffentlichung von Speicherabbildern bzw. Images in einem App-Repository zugeordnet werden. Grundsätzlich können mittels des Management-Systems 200 auch vierte Steuerungsanwendungen 204 verwaltet werden, die keine Tag-Zuordnung aufweisen.

Durch die Kennzeichnungen 210 der Steuerungsanwendungen 201-203 wird vorteilhafterweise eine jeweils anzuwendende Sicherheitsrichtlinie (Policy) festgelegt, die als Datensatz in einer entsprechenden Datenbank 220 gespeichert ist. Außerdem werden durch die Kennzeichnungen 210 vorzugsweise jeweils Funktionen der Steuerungsanwendungen 201-203 bzw. zur Bereitstellung der Steuerungsanwendungen 201-203 benötigte Sicherheitsberechtigungen bezeichnet oder vorgegeben. Im vorliegenden Ausführungsspiel wird mittels des Management-Systems 200 darüber hinaus für die Steuerungsanwendungen 201-203, denen eine Kennzeichnung als sicherheitskritische Steuerungsanwendung zugeordnet ist, jeweils zumindest eine Ablaufbedingung für die ausgewählten Sicherheitsberechtigungen festgelegt. Diese Ablaufbedingungen werden ebenfalls in der Datenbank 220 aufgezeichnet.

Nach Erfassung bzw. Bereitstellung und Klassifizierung der Steuerungsanwendungen 201-204 und Festlegung der Ablaufbedingungen wird eine Auswahl 301 der durch die Server-Einrichtung 100 bereitzustellenden Steuerungsanwendungen 201-204 und eine Auswahl 302 der durch Server-Einrichtung 100 anzuwendenden Sicherheitsrichtlinien vom Management-System 200 an die Server-Einrichtung übermittelt. Die Auswahl 301 der Steuerungsanwendungen 201-204 umfasst insbesondere deren Speicherabbilder bzw. Images. Grundsätzlich kann die Server-Einrichtung Images für Software-Container auch aus einem durch eine Vielzahl von Nutzern lesend bzw. schreibend zugreifbaren Speicher- und Bereitstellungssystem abrufen.

In der Server-Einrichtung 100 werden die Steuerungsanwendungen 201-204 werden jeweils mittels Ablaufsteuerungskomponenten 131-133 bereitgestellt, die in eine mittels der Server-Einrichtung 100 gebildete Ablaufsteuerungsumgebung 112 ladbar und dort ausführbar sind. Die Ablaufsteuerungsumgebung 112 ist als Anwendung auf einem Host-Betriebssystem 111 der Server-Einrichtung 100 installiert. Darüber hinaus können Ablaufsteuerungskomponenten 131-133 jeweils von der Server-Einrichtung 100 auf eine andere Server-Einrichtung zur dortigen Ausführung migriert bzw. auf anderen Server-Einrichtungen zeitgleich ausgeführt werden.

Im vorliegenden Ausführungsbeispiel sind bzw. umfassen die Ablaufsteuerungskomponenten 131-133 Software-Container, die jeweils von anderen Software-Containern, Container-Gruppen bzw. Pods isoliert innerhalb der Ablaufsteuerungsumgebung 112 auf dem Host-Betriebssystem 111 der Server-Einrichtung 100 ablaufen. Dabei nutzen die Software-Container jeweils gemeinsam mit anderen auf der Server-Einrichtung 100 ablaufenden Software-Containern einen Kernel des Host-Betriebssystems 111 der Server-Einrichtung 100. Die Ablaufsteuerungsumgebung 112 ist vorzugsweise eine Container-Laufzeitumgebung bzw. Container-Engine.

Eine Isolation der Ablaufsteuerungskomponenten bzw. eine Isolation von ausgewählten Betriebssystemmitteln untereinander kann insbesondere mittels Control Groups und Namespacing realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden.

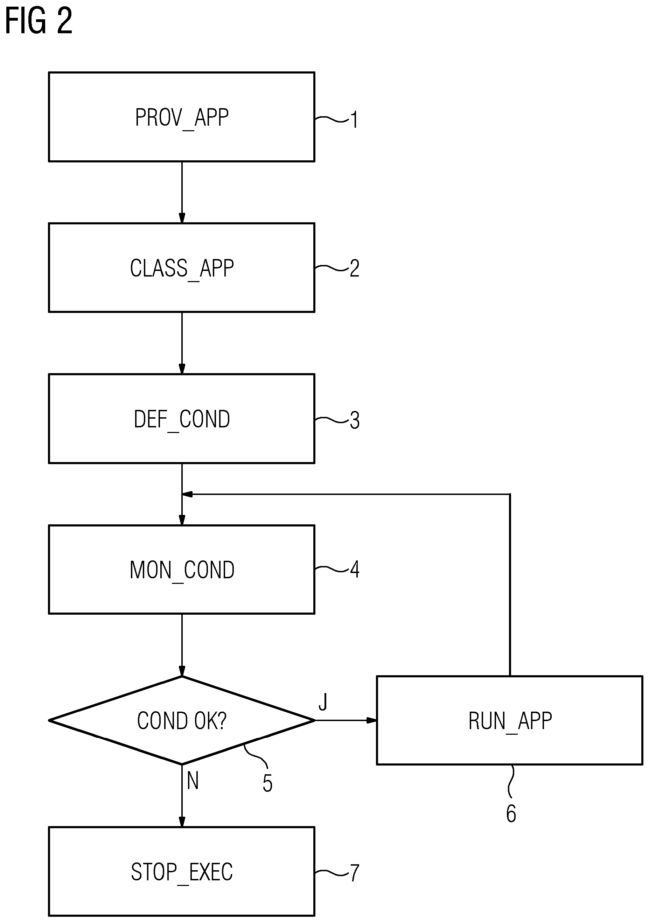

Entsprechend dem in Figur 2 dargestellten Verfahrensablauf erfolgt zunächst eine Bereitstellung der Steuerungsanwendungen (Schritt 1) und ihre Klassifizierung (Schritt 2) sowie eine Festlegung der Ablaufbedingungen (Schritt 3) im Management-System 100 entsprechend obigen Ausführungen. Nach Laden der Software-Container 131-133 für die Steuerungsanwendungen überwacht die Ablaufsteuerungsumgebung 112 während einer Ausführung der Software-Container 131-133 jeweils ein Eintreten der jeweiligen Ablaufbedingung (Schritt 4). Insbesondere wird die Ausführung der Software-Container 131-133 jeweils nur bei noch nicht eingetretener Ablaufbedingung gestartet. Vorzugsweise umfassen die Ablaufbedingungen jeweils eine maximale Ausführungsdauer für den jeweiligen Software-Container 131-133 umfassen.

Falls eine Überprüfung entsprechend Schritt 5 keine Grundlage für eine weitere Ausführung ergibt, wird die Ausführung der Software-Container 131-133 jeweils bei Eintreten der jeweiligen Ablaufbedingung beendet (Schritt 7). Andernfalls wird die Ausführung der Software-Container 131-133 entsprechend Schritt 6 fortgesetzt und das Eintreten der jeweiligen Ablaufbedingung entsprechend Schritt 4 weiter fortlaufend überwacht.

Die Ausführung der Software-Container 131-132 wird jeweils durch Ausführung einer in einer anzuwendenden Sicherheitsrichtlinie 113 definierten Aktion bei Eintreten der jeweiligen Ablaufbedingung beendet. Beispielsweise kann die definierte Aktion ein Stoppen bzw. Deinstallieren des jeweiligen Software-Containers 132, 133 umfassen. Hierzu wird vorteilhafterweise ein entsprechender Stopp-Befehl 114 oder ein Lösch-Befehl 115 versendet. Durch die Sicherheitsrichtlinie 113 wird vorzugsweise jeweils die Ablaufbedingung in Abhängigkeit von der Kennzeichnung 210 der jeweiligen Steuerungsanwendung 201-204 festgelegt.

Neben einem Stoppen oder einem Deinstallieren eines Software-Containers können vielfältige andere oder zusätzliche Aktionen bei Eintreten der jeweiligen Ablaufbedingung ausgeführt werden, beispielsweise
- Warnung an einen Betreiber,
- Setzen eines Schaltsignals,
- Blinken einer LED an einem Gerät,
- Generieren eines Log-Eintrags,
- Einschränken von Zugriffsrechten einer Steuerungsanwendung.

Die Aktionen können durch grundsätzlich durch die Server-Einrichtung 100 oder durch das Management-System 200 initiiert bzw. ausgeführt werden. Beispielsweise kann ein Stopp-Befehl von der Container-Laufzeitumgebung 112 selbst oder durch das Management-System 200 generiert werden. Im letzteren Fall übermittelt das Management-System 200 einen Stopp-Befehl zur Ausführung an die Container-Laufzeitumgebung 112.

Die vorliegende Erfindung ist grundsätzlich in sämtlichen Geräten anwendbar, die ein Nachladen von auf Container-Virtualisierung basierenden Applikationen (Apps) ermöglichen, insbesondere solcher Apps mit erhöhten Privilegien. Beispielsweise können Apps auf diese Weise in Edge-Geräte, IoT-Gateways, Industrie-PCs, on-primises Server-Systeme oder Cloud-Server-Systeme nachgeladen werden. Erhöhte Privilegien der Apps können beispielsweise in Linux-basierten System für spezielle Linux Capabilities, wie CAP NET ADMIN zum Administrieren von Netzwerkressourcen, insbesondere Routing-Tabellen oder Netzwerkinterfaces, für einen weitreichenden Zugriff auf ein Host-Dateisystem oder für ein Verwenden bestimmter Systemaufrufe (syscalls) vorgesehen sein. Darüber hinaus sind erhöhte Privilegien regelmäßig auch für Diagnoseapplikationen erforderlich, die weitreichende Zugriffsrechte auf Netzwerk-schnittstellen anderer Applikationen aufweisen. Für Diagnoseapplikationen kann beispielsweise in einer Sicherheitsrichtlinie hinterlegt sein, dass Steuerungsanwendungen, denen ein Tag "diagnostic" zugeordnet ist, nicht länger als 12 Stunden auf einem Gerät installiert sein dürfen und nach Ablauf dieser Zeit automatisch durch eine Container-Laufzeitumgebung zu deinstallieren.

Obige Ausführungen werden nachfolgend anhand eines praktischen Implementierungsbeispiels noch detaillierter erläutert. Zunächst wird in einer docker-compose.yml-Konfigurationsdatei für eine mittels einer Docker-Container-Engine bereitgestellten Netzwerkdiagnoseapp bei einem Publizieren der Netzwerkdiagnoseapp ein Tag in Form eines Image-Labels (Key-Value-Paar) definiert: com.siemens.ie.systemapp.expires=true. Dieses Tag kennzeichnet die Netzwerkdiagnoseapp als eine App, deren Nutzungszeitraum eingeschränkt werden soll.

Anschließend wird durch einen Hersteller - im vorliegenden Ausführungsbeispiel Siemens - eines Automatisierungsgeräts, in dem die Netzwerkdiagnoseapp ablaufen soll, eine einfache Policy vorgegeben, die bewirkt, dass eine App mit obigem Tag 8 Stunden nach ihrem Installieren gestoppt, gelöscht und eine Warnung an einen Geräte- oder Anlagenbetreiber versendet werden soll. Grundsätzlich kann diese Policy je nach Bedarf auch durch den Geräte- oder Anlagenbetreiber überschrieben werden.

Danach wird die Netzwerkdiagnoseapp auf das Automatisierungsgerät geladen und durch den Gerätebetreiber zur Diagnose verwendet. Aufgrund des zugeordneten Tags com.siemens.ie.system-app.expires=true fängt die Container-Engine zudem an, die Netzwerkdiagnoseapp hinsichtlich ihres Status regelmäßig zu prüfen. Stellt die Container-Engine bei einer solchen Prüfung fest, dass die Netzwerkdiagnoseapp seit mindestens 8 Stunden installiert ist und noch läuft, stoppt die Container-Engine die Netzwerkdiagnoseapp, deinstalliert sie und benachrichtigt den Gerätebetreiber, dass die Netzwerkdiagnoseapp deinstalliert wurde. Ein solches Szenario kann möglich sein, wenn der Gerätebetreiber vergessen hat, die Netzwerkdiagnoseapp nach ihrer Verwendung zu deinstallieren.

Alternativ zur Definition des Tags für die Netzwerkdiagnoseapp durch den Gerätebetreiber kann das Tag durch einen Entwickler der Netzwerkdiagnoseapp explizit definiert werden. Dies kann beispielsweise bei einem Erstellen eines Container-Images oder durch Auswahl einer App-Kategorie, beispielsweise "Diagnose" oder "regulärer Betrieb", aus einer vorgegebenen Menge beim Publizieren der App geschehen. Auch wenn der Gerätebetreiber das Tag festlegt, kann dieses beispielsweise aus einer vorgegebenen Menge ausgewählt werden, um eine Nutzung, Verwaltung und Übertragbarkeit auf andere Systeme zu vereinfachen. Entsprechend einer weiteren Alternative kann ein Tag automatisiert bzw. implizit zugewiesen werden, insbesondere in Abhängigkeit davon, welche Rechte durch eine App angefordert werden. Steht in einer Deployment-Information für eine App, beispielsweise in einer docker-compose.yml-Konfigurati-onsdatei, dass sich die App einen Process ID Namespace eines Hosts Teilen möchte, kann automatisch ein entsprechender Tag zu Metainformationen der App hinzugefügt werden. Dies kann insbesondere bei einem Publizieren der App, bei einem Herunterladen der App in das Management-System 200 oder bei einem Laden der App auf die Server-Einrichtung 100 erfolgen.

Die Policy für Netzwerkdiagnoseapp kann in einer einfachen Variante für das gesamte Automatisierungsgerät definiert werden, in dem die Netzwerkdiagnoseapp abläuft. Beispielsweise kann durch eine solche Policy erreicht werden, dass der Gerätebetreiber bei sämtlichen Apps mit dem Tag "diagnostic" gewarnt wird, wenn die jeweilige App bereits länger als 11 Stunden auf dem Automatisierungsgerät installiert ist. Außerdem kann eine solche Warnung einen Hinweis umfassen, dass die jeweilige App nach 12 Stunden ab ihrem Installationszeitpunkt automatisch deinstalliert wird. Dabei kann dem Gerätebetreiber optional angeboten werden, dass die App auf seinen ausdrücklichen Wunsch auch nach Ablauf der 12 Stunden auf dem Automatisierungsgerät installiert bleibt.

Ein weiteres Beispiel einer möglichen Policy für Apps ist ein Überschreiten einer festgelegten Dauer, während der eine App nicht mehr verwendet wurde. Eine solche Policy kann gerätespezifisch oder für eine Reihe von Geräten gültig sein. Alternativ oder zusätzlich können auch andere auf einem Gerät laufende Apps durch eine Policy berücksichtigt werden. Insbesondere kann so festgelegt werden, dass Apps mit einem bestimmten Tag so lange auf einem Gerät installiert sein und laufen dürfen, wie eine bestimmte andere App, die beispielsweise kritische Produktionsdaten verarbeitet, nicht gleichzeitig läuft.

Durch eine Policy können auch Gerätezustände berücksichtigt werden. Befindet sich ein Gerät beispielsweise in einem Einrichtungs- oder Wartungszustand, können ausgewählte Apps ohne zeitliche Einschränkung laufen. Ist das Gerät dagegen in einem aktiven Betriebsmodus, werden die jeweiligen Ablaufbedingung überprüft. Insbesondere kann die Policy dialogbasiert durch den Gerätebetreiber bei einer Einrichtung des jeweiligen Geräts festgelegt werden. Hierzu werden beispielsweise folgende Optionen an einer graphischen Benutzerschnittstelle bzw. an einer Befehlszeilenschnittstelle abgefragt:
- "Diagnoseapplikationen 12 h nach letzter Verwendung automatisch deinstallieren? [J/N]",
- ("Applikation nach Stoppen automatisch deinstallieren? [J/N]" vor Laden einer App oder
- "Alle 2 h fragen, ob App gestoppt werden soll? [J/N]".

Auf diese Weise können mit geringem Aufwand an individuelle Anforderungen angepasste Policies erstellt werden.

## Patentansprüche

1. Verfahren zur Bereitstellung von Steuerungsanwendungen für ein industrielles Automatisierungssystem, bei dem
- die Steuerungsanwendungen (201-204) jeweils mittels Ablaufsteuerungskomponenten (131-133) bereitgestellt werden, die in eine mittels einer Server-Einrichtung (100) gebildete Ablaufsteuerungsumgebung (112) ladbar und dort ausführbar sind,
**dadurch gekennzeichnet, dass**
- Steuerungsanwendungen (201-203), die ausgewählte Sicherheitsberechtigungen erfordern, jeweils eine Kennzeichnung (210) als sicherheitskritische Steuerungsanwendung zugeordnet wird,
- für die Steuerungsanwendungen (201-203), denen eine Kennzeichnung (210) als sicherheitskritische Steuerungsanwendung zugeordnet ist, jeweils zumindest eine Ablaufbedingung für die ausgewählten Sicherheitsberechtigungen festgelegt wird,
- die Ablaufsteuerungsumgebung (112) während einer Ausführung der Ablaufsteuerungskomponenten (131-133) für die Steuerungsanwendungen jeweils ein Eintreten der jeweiligen Ablaufbedingung überwacht,
- die Ausführung der Ablaufsteuerungskomponenten jeweils bei Eintreten der jeweiligen Ablaufbedingung beendet wird.

2. Verfahren nach Anspruch 1,
bei dem die Ausführung der Ablaufsteuerungskomponenten jeweils durch Ausführung einer in einer Sicherheitsrichtlinie definierten Aktion bei Eintreten der jeweiligen Ablaufbedingung beendet wird.

3. Verfahren nach Anspruch 2,
bei dem die definierte Aktion ein Stoppen und/oder Löschen der jeweiligen Ablaufsteuerungskomponente umfasst.

4. Verfahren nach einem der Ansprüche 2 oder 3,
bei dem durch die Sicherheitsrichtlinie jeweils die Ablaufbedingung in Abhängigkeit von der Kennzeichnung der jeweiligen Steuerungsanwendung festgelegt wird.

5. Verfahren nach einem der Ansprüche 1 bis 4,
bei dem durch die Kennzeichnungen der Steuerungsanwendungen eine jeweils anzuwendende Sicherheitsrichtlinie festgelegt wird.

6. Verfahren nach einem der Ansprüche 1 bis 5,
bei dem durch die Kennzeichnungen jeweils Funktionen der Steuerungsanwendungen und/oder zur Bereitstellung der Steuerungsanwendungen benötigte Sicherheitsberechtigungen bezeichnet oder vorgegeben werden.

7. Verfahren nach einem der Ansprüche 1 bis 6,
bei dem die Kennzeichnungen jeweils als Zeichenkette zu Metadaten für die jeweilige Steuerungsanwendung hinzugefügt werden.

8. Verfahren nach einem der Ansprüche 1 bis 7,
bei dem die Ausführung der Ablaufsteuerungskomponenten jeweils nur bei noch nicht eingetretener Ablaufbedingung gestartet wird.

9. Verfahren nach einem der Ansprüche 1 bis 8,
bei dem die Ablaufbedingungen jeweils eine maximale Ausführungsdauer für die jeweilige Ablaufsteuerungskomponente umfassen.

10. Verfahren nach einem der Ansprüche 1 bis 9,
bei dem die Ablaufsteuerungskomponenten Software-Container sind und bei dem die Ablaufsteuerungsumgebung eine Container-Laufzeitumgebung ist.

11. Verfahren nach Anspruch 10,
bei dem Speicherabbilder für die Software-Container aus einem durch eine Vielzahl von Nutzern lesend und/oder schreibend zugreifbaren Speicher- und Bereitstellungssystem abrufbar sind.

12. Verfahren nach einem der Ansprüche 1 bis 11,
bei dem die Ablaufsteuerungskomponenten auf jeweils andere Server-Einrichtungen zur dortigen Ausführung migrierbar und/oder auf jeweils anderen Server-Einrichtungen zeitgleich ausführbar sind.

13. System zur Bereitstellung von Steuerungsanwendungen für ein industrielles Automatisierungssystem mit
- einer mittels einer Server-Einrichtung (100) gebildeten Ablaufsteuerungsumgebung (112),
- zumindest einer Ablaufsteuerungskomponente (131-133) zur Bereitstellung einer Steuerungsanwendung (201-204), wobei die Ablaufsteuerungskomponente in die Ablaufsteuerungsumgebung (112) ladbar und dort ausführbar ist,
- **dadurch gekennzeichnet, dass**
das System dafür eingerichtet ist, dass Steuerungsanwendungen (201-203), die ausgewählte Sicherheitsberechtigungen erfordern, jeweils eine Kennzeichnung (210) als sicherheitskritische Steuerungsanwendung zugeordnet wird, und dass
- für die Steuerungsanwendungen (201-203), denen eine Kennzeichnung (210) als sicherheitskritische Steuerungsanwendung zugeordnet ist, jeweils zumindest eine Ablaufbedingung für die ausgewählten Sicherheitsberechtigungen festgelegt wird,
- wobei die Ablaufsteuerungsumgebung (112) dafür eingerichtet ist, während einer Ausführung der Ablaufsteuerungskomponenten (131-133) für die Steuerungsanwendungen jeweils ein Eintreten der jeweiligen Ablaufbedingung zu überwachen und dass
- die Ausführung der Ablaufsteuerungskomponenten jeweils bei Eintreten der jeweiligen Ablaufbedingung beendet wird.

## Claims

1. Method for providing control applications for an industrial automation system, in which
- the control applications (201-204) are in each case provided by means of sequential control components (131-133), which can be loaded into a sequential control environment (112) formed by means of a server facility (100), where they can be executed,
**characterised in that**
- control applications (201-203) that require selected safety permissions are in each case assigned an identifier (210) as safety-critical control application,
- for the control application (201-203) to which an identifier (210) is assigned as safety-critical control application, at least one sequence condition is stipulated for the selected safety permissions in each case,
- during an execution of the sequential control components (131-133), the sequential control environment (112) monitors an occurrence of the respective sequence condition for the control applications in each case,
- the execution of the sequential control components is terminated on the occurrence of the respective sequence condition in each case.

2. Method according to claim 1,
in which the execution of the sequential control components is terminated in each case by execution of an action, defined in a safety guideline, on the occurrence of the respective sequence condition.

3. Method according to claim 2,
in which the defined action comprises stopping and/or removing the respective sequential control component.

4. Method according to one of claims 2 or 3,
in which the sequence condition is stipulated in each case by the safety guideline as a function of the identifier of the respective control application.

5. Method according to one of claims 1 to 4,
in which a safety guideline to be applied in each case is stipulated by the identifiers of the control applications.

6. Method according to one of claims 1 to 5,
in which functions of the control applications and/or safety permissions necessary to provide the control applications are designated or specified by the identifiers in each case.

7. Method according to one of claims 1 to 6,
in which the identifiers are added to metadata for the respective control application as a character string in each case.

8. Method according to one of claims 1 to 7,
in which the execution of the sequential control components in each case is only started when a sequence condition has not yet occurred.

9. Method according to one of claims 1 to 8,
in which the sequence conditions comprise a maximum execution duration for the respective sequential control component in each case.

10. Method according to one of claims 1 to 9,
in which the sequential control components are software containers and in which the sequential control environment is a container runtime environment.

11. Method according to claim 10,
in which storage maps for the software containers can be retrieved from a storage and provision system that can be accessed by a large number of users in a reading and/or writing manner.

12. Method according to one of claims 1 to 11,
in which the sequential control components can be migrated to other server facilities in each case, where they are executed, and/or can be executed simultaneously on other server facilities in each case.

13. System for providing control applications for an industrial automation system with
- a sequential control environment (112) formed by means of a server facility (100),
- at least one sequential control component (131-133) for providing a control application (201-204), wherein the sequential control component can be loaded into the sequential control environment (112), where it can be executed,
- **characterised in that**
the system is configured so that control applications (201-203) that require selected safety permissions are in each case assigned an identifier (210) as safety-critical control application, and that
- for the control application (201-203) to which an identifier (210) is assigned as safety-critical control application, at least one sequence condition is stipulated for the selected safety permissions in each case,
- wherein the sequential control environment (112) is configured, during an execution of the sequential control components (131-133), so as to monitor an occurrence of the respective sequence condition for the control applications in each case and that
- the execution of the sequential control components is terminated on the occurrence of the respective sequence condition in each case.

## Revendications

1. Procédé pour disposer d'applications de commande d'un système d'automatisation industriel, dans lequel
- on dispose des applications (201-204) de commande respectivement au moyen de composants (131-133) de commande de déroulement, qui peuvent être chargés dans un environnement (112) de commande de déroulement formé au moyen d'un dispositif (100) serveur et y être exécutés,
**caractérisé en ce que**
- l'on associe aux applications (201-203) de commande, qui exigent des corrections de sécurité sélectionnées, respectivement une identification (210) comme application de commande critique du point de vue de la sécurité,
- pour les applications (201-203) de commande, auxquelles est associée une identification (210) comme application de commande critique du point de vue de la sécurité, on fixe respectivement au moins une condition de déroulement pour les corrections de sécurité sélectionnées,
- l'environnement (112) de commande de déroulement contrôle pendant une réalisation des composants (131-133) de commande de déroulement pour les applications de commande respectivement une apparition de la condition de déroulement respective,
- on met fin à la réalisation des composants de commande de déroulement respectivement à l'apparition de la condition de déroulement respective.

2. Procédé suivant la revendication 1,
dans lequel on met fin, à l'apparition de la condition de déroulement respective, à la réalisation des composants de commande de déroulement respectivement par réalisation d'une action définie dans une directive de sécurité.

3. Procédé suivant la revendication 2,
dans lequel l'action définie comprend un arrêt et/ou un effacement des composants respectifs de commande de déroulement.

4. Procédé suivant l'une des revendications 2 ou 3,
dans lequel on fixe par la directive de sécurité respectivement la condition de déroulement en fonction de l'identification de l'application de commande respective.

5. Procédé suivant l'une des revendications 1 à 4,
dans lequel on fixe par les identifications des applications de commande une directive de sécurité à appliquer respectivement.

6. Procédé suivant l'une des revendications 1 à 5,
dans lequel on désigne ou on prescrit par les identifications respectivement des fonctions des applications de commande et/ou des corrections de sécurité nécessaires pour la mise à disposition des applications de commande.

7. Procédé suivant l'une des revendications 1 à 6,
dans lequel on ajoute des identifications respectivement sous la forme d'une chaîne de signes à des métadonnées pour l'application de commande respective.

8. Procédé suivant l'une des revendications 1 à 7,
dans lequel on fait débuter la réalisation des composants de commande de déroulement respectivement seulement lorsqu'une condition de déroulement n'est pas encore apparue.

9. Procédé suivant l'une des revendications 1 à 8,
dans lequel les conditions de déroulement comprennent respectivement une durée maximum de réalisation du composant de commande de déroulement respectif.

10. Procédé suivant l'une des revendications 1 à 9,
dans lequel les composants de commande de déroulement sont des conteneurs logiciels, et dans lequel l'environnement de commande de déroulement est un environnement de temps de fonctionnement d'un conteneur.

11. Procédé suivant la revendication 10,
dans lequel des représentations de mémoire pour le conteneur logiciel peuvent être appelées à partir d'un système de mémoire et de mise à disposition, auquel une pluralité d'utilisateurs peuvent accéder en lecture et/ou en écriture.

12. Procédé suivant l'une des revendications 1 à 11,
dans lequel les composants de commande de déroulement peuvent migrer sur d'autres dispositifs serveur respectifs pour y être exécutés et/ou peuvent être exécutés en même temps sur respectivement d'autres dispositifs serveur.

13. Système pour disposer d'applications de commande d'un système d'automatisation industriel comprenant
- un environnement (112) de commande de déroulement formé au moyen d'un dispositif (100) serveur,
- au moins un composant (131-133) de commande de déroulement pour disposer d'une application (201-204) de commande, dans lequel le composant de commande de déroulement peut être chargé dans l'environnement (112) de commande de déroulement et y être exécuté,
**caractérisé en ce que**
- le système est agencé pour qu'aux applications (201-203) de commande, qui exigent des corrections de sécurité sélectionnées, soit associée respectivement une identification (210) comme application de commande critique du point de vue de la sécurité, et **en ce que**
- pour les applications (201-203) de commande, auxquelles est associée une identification (210) comme application de commande critique du point de vue de la sécurité, on fixe respectivement au moins une condition de déroulement des corrections de sécurité sélectionnées,
- dans lequel l'environnement (112) de commande de déroulement est agencé pour contrôler, pendant une réalisation des composants (131-133) de commande de déroulement, pour les applications de commande respectivement une apparition de la condition de déroulement respective et **en ce que**
- l'on met fin à la réalisation des composants de commande de déroulement respectivement à l'apparition de la condition de déroulement respective.
